# EUROPÄISCHE PATENTSCHRIFT

(11) **EP 1 967 834 B1**
(45) Veröffentlichungstag und Bekanntmachung des Hinweises auf die Patenterteilung: **30.05.2012**
(21) Anmeldenummer: 08102311.1
(22) Anmeldetag: 05.03.2008
(51) Int. Cl.: G01L 23/22, G01M 15/10

(54) **Zündkerze mit einem Druckmesseinrichtung**
Ignition plug with a pressure sensing device
Bougie d'allumage avec un capteur de mesure de pression

(30) Priorität: 08.03.2007 AT 3672007
(43) Veröffentlichungstag der Anmeldung: 10.09.2008
(73) Patentinhaber: AVL List GmbH, 8020 Graz (AT)
(72) Erfinder: WinkIhofer, Ernst, 8565 St. Johann ob Hohenburg 1 (AT)
(74) Vertreter: Babeluk, Michael

(56) Entgegenhaltungen:
- WO-A-01/40753
- JP-A- 2 109 287
- JP-A- 4 012 487
- US-A- 4 413 509

## Beschreibung

Die Erfindung betrifft eine Zündkerze mit einer Druckmesseinrichtung mit einer in einem Gehäuse ausgebildeten Längsbohrung zur Aufnahme eines Isolators, wobei im Gehäuse eine Bohrung zur Aufnahme eines in einem Brennraum mündenden Lichtleiters angeordnet ist.

Aus der AT 407.577 B ist eine Zündkerze mit einer durchgehenden, außermittig im Gehäuse ausgebildeten Längsbohrung zur Aufnahme eines Isolators bekannt. Die Zündkerze weist Gehäusebereiche unterschiedlicher Wandstärke auf, wobei in einem Bereich größerer Wandstärke eine Druckmesseinrichtung angeordnet ist. Die Bohrung zur Aufnahme der Druckmesseinrichtung ist geneigt in Bezug auf die Längsbohrung ausgebildet.

Aus der AT 002.228 U1 ist eine Zündkerze für Brennkraftmaschinen bekannt, welche ein in die Zündkerze integrierten optischen Sensor mit mehreren in den Brennraum mündende Lichtleiter aufweist. Die Lichtleiter sind dabei konzentrisch um die Achse der Mittelelektrode angeordnet. Jeweils eine Gruppe von parallel zur Achse der Zündkerze verlaufende Bohrungen münden in eine als Sackloch ausgebildete Sammelbohrung ein. Die optische Verbindung wird über Lichtleiterkabel und den in den Brennraum über die Sammelbohrung und die Bohrungen mündenden Lichtleitern hergestellt.

Die AT 003.845 U1 beschreibt eine optoelektronische Messeinrichtung zur Erfassung von Verbrennungsvorgängen im Brennraum einer im Betrieb befindlichen Brennkraftmaschine, wobei optische Sensoren in einem im Wesentlichen zylindrischen, in den Brennraum mündenden Bauteil und die Sensorenden im Wesentlichen radial am Mantel des Bauteils angeordnet sind. Der Bauteil kann beispielsweise als Zündkerze ausgebildet sein.

Weiters ist aus der AT 402.116 B eine Zündkerze mit einem Kraftmesselement zur Messung des an der Zündkerze anliegenden Druckes bekannt, wobei der Isolierkörper der Zündkerze bei Druckbeaufschlagung in axialer Richtung unter Zwischenlage des Kraftmesselementes sich am Kerzengehäuse abstützt.

Die JP 04-012487 A beschreibt eine Zündkerze mit einem ringförmigen piezoelektrischen Sensor, dessen Innenbereich an einem zylindrischen Mantelbereich des metallischen Zündkerzenträgers anliegt. Die Zündkerze weist weiters eine Bohrung zur Aufnahme eines optischen Leiters auf, welcher innerhalb des Zündkerzengewindes angeordnet ist. Weiters ist ein Thermoelement zur Überwachung der Temperatur der Elektrode der Zündkerze vorgesehen. Die Zündkerze weist keine Bohrung zur Aufnahme der Druckmesseinrichtung auf. Der im Bereich des Gewindefußes der Zündkerze angeordnete ringförmige Drucksensor hat den Nachteil, dass Spannungen zufolge der Befestigung der Zündkerze im Zylinderkopf die Messergebnisse verfälschen können, wodurch die Druckmessung relativ fehleranfällig ist.

Aus der JP 02-109287 A ist eine Zündkerze mit einem optischen Sensor zur Verbrennungsüberwachung bekannt, wobei der optische Sensor in einer Bohrung angeordnet ist, welche geneigt zur Elektrodenachse der Zündkerze positioniert ist. Eine Druckmesseinrichtung ist nicht vorgesehen.

Die meisten bekannten Zündkerzen sind somit entweder mit einem Drucksensor, oder einem optischen Sensor kombiniert. Bisher war es nicht bekannt oder wurde sogar für nicht fertigbar gehalten, in einer Zündkerze sowohl einen optischen Sensor, als auch einen Drucksensor unterzubringen und zu fertigen.

Eine parallele optische Messung und Druckmessung ist unumgänglich, um Brennvorgänge in Echtzeit überwachen zu können. Aufgrund der kompakten Anordnung der Gaswechselventile, der Einspritzeinrichtungen und der Zündkerzen ist es zunehmend schwierig, zusätzliche Bohrungen für die optische Überwachung des Brennraumes und/oder der Drucküberwachung des Brennraumes im Zylinderkopf anzuordnen. Daher ist es wünschenswert, die Zahl von Messbohrungen so gering wie möglich zu halten. Eine Möglichkeit diese zusätzlichen Bohrungen zu vermeiden, besteht darin, in die Zündkerze eine zusätzliche Messfunktion zu adaptieren.

Wünschenswert wäre es, Druckmessung und Lichtmessung möglichst an der gleichen Stelle durchzuführen, um hohe Aussagequalität bei der Auswertung von Verbrennungsvorgängen zu bieten.

Aufgabe der Erfindung ist es, eine Zündkerze der eingangs genannten Art derart weiterzubilden, dass Anschlussmasse wie bei einer herkömmlichen Zündkerze erreicht und parallel optische Messungen und piezoelektrische Druckmessungen durchgeführt werden können.

Erfindungsgemäß wird dies dadurch erreicht, dass das Gehäuse eine erste Bohrung zur Aufnahme einer Druckmesseinrichtung aufweist, wobei die Achse der der Aufnahme des Lichtleiters dienenden zweiten Bohrung windschief zur Achse der ersten Bohrung und/oder windschief zur Zündkerzenachse, angeordnet ist.

Durch die windschiefe Anordnung von erster und zweiter Bohrung wird eine zu starke Verminderung der Wandstärke vermieden, so dass die thermischen und mechachnischen Spannungen im Gehäuse einen zulässigen Wert nicht überschreiten.

Besonders vorteilhaft ist es dazu, wenn die erste Bohrung mit der Zündkerzenachse einen Winkel von etwa 0° bis 15°, vorzugsweise 3° bis 7°, einschließt, wobei vorzugsweise die Achse der ersten Bohrung mit der Achse der Längsbohrung eine Ebene aufspannt. Die zweite Bohrung schließt - in einer Draufsicht auf die Zündkerzenachse betrachtet - mit der Ebene einen Winkel ≤25°, vorzugsweise 0° bis 22°, ein. Vorzugsweise ist vorgesehen, dass die Achse der zweiten Bohrung mit einer von der Zündkerzenachse projizierten Geraden einen Winkel ≤10°, vorzugsweise ≤5°, einschließt. Die geneigte Anordnung der ersten und zweiten Bohrung hat den Vorteil, dass im oberen Teil der Zündkerze genügend Platz für die optischen, bzw. elektrischen Anschlüsse bereitgestellt wird.

Die Längsbohrung kann parallel zur Zündkerzenachse verlaufen und von der Zylinderachse beabstandet sein. Somit bilden sich Gehäusebereiche mit unterschiedlicher Wandstärke aus, wobei vorteilhafterweise vorgesehen ist, dass die erste Bohrung und/oder die zweite Bohrung in einem Bereich des Gehäuses angeordnet ist, welcher die größte Wandstärke in Bezug auf die Längsbohrung aufweist.

Die Erfindung wird im Folgenden anhand der Figuren näher erläutert. Es zeigen:
- Fig. 1: die erfindungsgemäße Zündkerze in einem Längsschnitt,
- Fig. 2: die Zündkerze in einer elektrodenseitigen Stirnansicht,
- Fig. 3: ein Gehäuse einer Zündkerze in einer Seitenansicht,
- Fig. 4: das Gehäuse in einer Draufsicht und

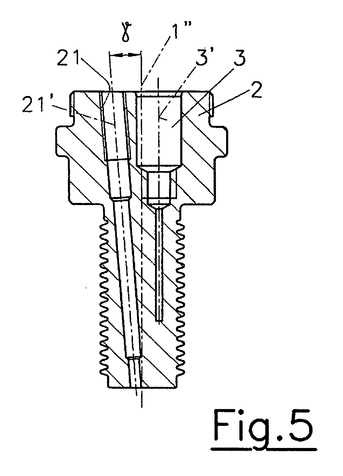

- Fig. 5: das Gehäuse in einem Schnitt gemäß der Linie V-V in Fig. 4.

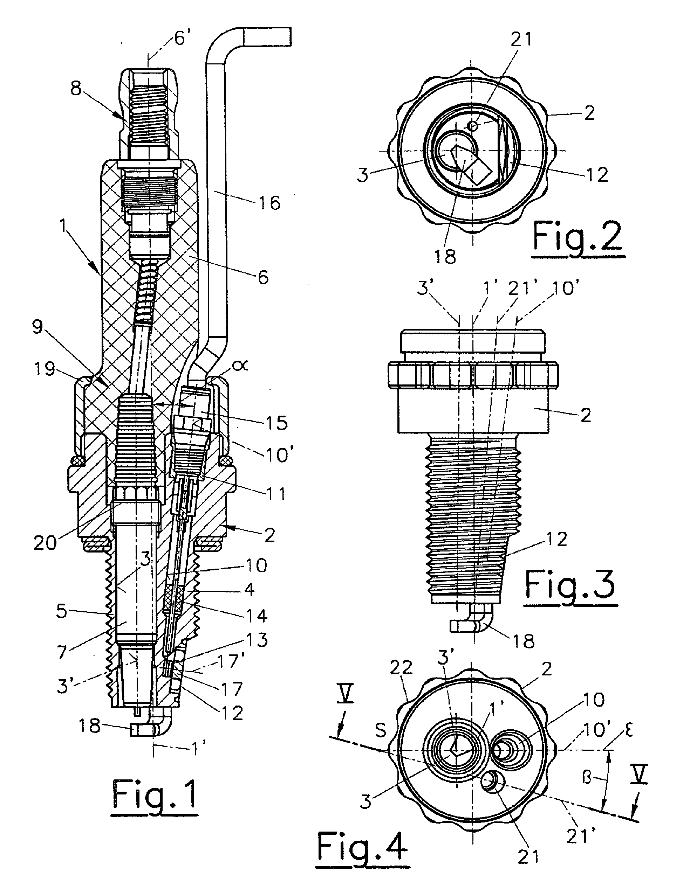

Fig. 1 zeigt eine Zündkerze 1 mit einer durchgehenden, außermittig im Gehäuse 2 ausgebildeten Längsbohrung 3. Durch die außermittige Anordnung der Längsbohrung 3 entstehen Gehäusebereiche von unterschiedlicher Wandstärke, wobei der Bereich größerer Wandstärke mit 4 und jener mit geringerer Wandstärke mit 5 bezeichnet ist. Der Isolator 9 der Zündkerze 1 ist mehrteilig ausgebildet und weist einen Isolatoroberteil 6 mit einem Hochspannungsanschluss 8, sowie einen dem Brennraum zugewandten Isolatorunterteil 7 auf. Die Achse 3' der Längsbohrung 3 weist einen Abstand von der Achse 1' der Zündkerze 1 auf und steht im Ausführungsbeispiel parallel zur dieser. Die Achse 3' der Längsbohrung 3 kann aber auch geneigt zur Zündkerzenachse 1' angeordnet sein, so dass die Zündkerzenspitze, bzw. deren Elektrode 18, der Zündkerzenachse 1' angenähert wird.

Die Achse 6' des Isolatoroberteils 6 fällt hingegen mit der Zündkerzenachse 1' zusammen, so dass der Isolatoroberteil 6, bzw. zumindest der zum Anschluss des Zündkerzensteckers, bzw. der Zündspule verwendete Teil des Isolatoroberteils 6 radial symmetrisch und in seinen Abmessungen im Wesentlichen gleich wie bei einer herkömmlichen Zündkerze ausgebildet sein kann. Dadurch ist ein problemloser Einsatz ohne zusätzliche Hilfsmittel oder Adapterteile gewährleistet.

Im Bereich 4 größerer Wandstärke des Gehäuses 2 ist neben der Längsbohrung 3 zur Aufnahme des Isolatorunterteils 7 eine seitliche erste Bohrung 10 zur Aufnahme einer Druckmesseinrichtung 11 vorgesehen, welche erste Bohrung 10 in einem Winkel α von bis zu 15° zur Zündkerzenachse 1' geneigt sein kann. Vorteilhafterweise werden Winkel α von etwa 3° bis 7° verwendet, da durch eine geringfügige Neigung der zur Verfügung stehende Platz im Gehäuse 2 optimal ausgenutzt werden kann und auch die Montage der Druckmesseinrichtung 11 erleichtert wird. Beispielsweise kann nach dem Entfernen der Kappe 19, mit welcher, beispielweise über eine Schraubverbindung, der Isolatoroberteil 6 am Gehäuse 2 fixiert wird, die erste Bohrung 10 zugänglich gemacht werden. Der Isolatorunterteil 7 wird durch die Isolatorschraube 20 im Gehäuse 2 festgehalten.

Im dargestellten Ausführungsbeispiel weist die Druckmesseinrichtung 11 ein Druckmesselement 13 auf, welches in einer brennraumseitigen Ausnehmung 12 des Gehäuses 2 der Zündkerze 1 angeordnet ist. Die Ausnehmung 12 steht direkt mit dem Brennraum der Brennkraftmaschine in Verbindung. Die Signalableitung 14 ist in der ersten Bohrung 10 geführt und verbindet das Druckmesselemente 13 mit einem Anschluss 15 für das Messkabel 16.

Das Druckmesselement 13 weist ein von einer Sensormembran 17 mit Druck beaufschlagtes piezoelektrisches Element auf, wobei die zentrale Achse 17' der Sensormembran 17 im dargestellten Ausführungsbeispiel im Wesentlichen normal auf die Achse 10' der ersten Bohrung steht. Im Rahmen der Erfindung sind natürlich auch andere Ausrichtungen der Sensormembran, insbesondere auch eine direkt nach unten in Richtung zum Brennraum gerichtete Membran vorstellbar.

Im Bereich 4 größter Wandstärke des Gehäuses 2 ist weiters neben der ersten Bohrung 10 eine zweite Bohrung 21 zur Aufnahme eines nicht weiter dargestellten lichtleitenden Elementes angeordnet. Die zweite Bohrung 21 mündet dabei unweit der Elektrode 18 in den Brennraum ein.

Die Achse 10' der ersten Bohrung 10 spannt mit der Achse 3' der Längsbohrung 3 eine Ebene ε auf, wobei vorzugsweise die Zylinderachse 1' in der Ebene ε verläuft. Die Achse 21' der zweiten Bohrung 21 ist im Bezug auf die Achse 10' der ersten Bohrung 10 und in Bezug auf die Zündkerzenachse 1', sowie in Bezug auf die Achse 3' der Längsbohrung 3 windschief angeordnet und schneidet die Ebene ε in einem Punkt S, welcher in der dargestellten Ausführungsvariante - im in Fig. 4 dargestellten Grundriss des Gehäuses 2 betrachtet - außerhalb des Profils 22 der Zündkerze 1 liegt. Die Achse 21' der zweiten Bohrung 21 weist gegenüber der Ebene ε einen Winkel β ≤25°, vorzugsweise 0° bis 22°, auf. Mit einer von der Zündkerzenachse 1' projizierten Geraden 1" schließt die Achse 21' der zweiten Bohrung 21 einen Winkel γ von ≤10°, vorzugsweise ≤5°, ein.

Durch die beschrieben Anordnung der ersten und der zweiten Bohrung 10, 21, sowie der Längsbohrung 3 lassen sich fertigungstechnische, mechanische und thermische Probleme weitgehend vermeiden, wobei die Zündkerze 1, mit welcher gleichzeitig optische und Druckmessungen im Brennraum durchgeführt werden können, von der Größe her einer Standardzündkerze entspricht.

## Patentansprüche

1. Zündkerze (1) mit einer Druckmesseinrichtung (11) mit einer in einem Gehäuse (2) ausgebildeten Längsbohrung (3) zur Aufnahme eines Isolators (9), wobei im Gehäuse (2) eine Bohrung (21) zur Aufnahme eines in einem Brennraum mündenden Lichtleiters angeordnet ist, **dadurch gekennzeichnet, dass** das Gehäuse (2) eine erste Bohrung (10) zur Aufnahme einer Druckmesseinrichtung (11) aufweist, wobei die Achse (21') der der Aufnahme des Lichtleiters dienenden zweiten Bohrung (21) windschief zur Achse (10') der ersten Bohrung (10) und/oder windschief zur Zündkerzenachse (1'), angeordnet ist.

2. Zündkerze (1) nach Anspruch 1, **dadurch gekennzeichnet, dass** die Achse (10') der ersten Bohrung (10) mit der Zündkerzenachse (1') einen Winkel (α) von 0° bis 15°, vorzugsweise 3° bis 7°, einschließt.

3. Zündkerze (1) nach Anspruch 2, **dadurch gekennzeichnet, dass** die Achse (10') der ersten Bohrung (10) mit der Achse (3') der Längsbohrung (3) eine Ebene (ε) aufspannt.

4. Zündkerze (1) nach Anspruch 3, **dadurch gekennzeichnet, dass** - im Grundriss betrachtet - die Achse (21') der zweiten Bohrung (21) mit der Ebene (ε) einen Winkel (β) ≤25°, vorzugsweise 0° bis 22°, aufspannt.

5. Zündkerze (1) nach einem der Ansprüche 1 bis 4, **dadurch gekennzeichnet, dass** die Längsbohrung (3') parallel zur Zündkerzenachse (1') angeordnet ist, wobei die Achse (3') der Längsbohrung (3) von der Zündkerzenachse (1') beabstandet ist.

6. Zündkerze (1) nach einem der Ansprüche 1 bis 5, **dadurch gekennzeichnet, dass** die erste Bohrung (10') und/oder die zweite Bohrung (21) in einem Bereich des Gehäuses (2) angeordnet ist, welcher die größte Wandstärke in Bezug auf die Längsbohrung (3) aufweist.

7. Zündkerze (1) nach einem der Ansprüche 1 bis 6, **dadurch gekennzeichnet, dass** die Achse (21') der zweiten Bohrung (21) mit einer von der Zündkerzenachse (1') projizierten Geraden (1") einen Winkel (γ) ≤10°, vorzugsweise ≤5°, einschließt.

8. Zündkerze (1) nach einem der Ansprüche 1 bis 7, **dadurch gekennzeichnet, dass** die Längsbohrung (3) von der Zündkerzenachse (1') beabstandet ist, wobei vorzugsweise die Achse (3') der Längsbohrung (3) parallel zur Zündkerzenachse (1') angeordnet ist.

## Claims

1. A spark plug (1), comprising a pressure measuring device (11) with a longitudinal bore (3) formed in a housing (2) for accommodating an insulator (9), with a bore (21) being arranged in the housing (2) for accommodating a light guide that opens into a combustion chamber, **characterised in that** the housing (2) comprises a first bore (10) for accommodating a pressure measuring device (11), with the axis (21') of the second bore (21) used for accommodating the light guide being arranged in a skewed manner relative to the axis (10') of the first bore (10) and/or in a skewed manner relative to the spark plug axis (1').

2. A spark plug (1) according to claim 1, **characterised in that** the axis (10') of the first bore (10) encloses with the spark plug axis (1') an angle (α) of 0° to 15°, preferably 3° to 7°.

3. A spark plug (1) according to claim 2, **characterised in that** the axis (10') of the first bore (10) spans a plane (ε) with the axis (3') of the longitudinal bore (3).

4. A spark plug (1) according to claim 3, **characterised in that** the axis (21') of the second bore (21), when seen in a plan view, encloses an angle of ≤25° with the plane (ε), preferably 0° to 22°.

5. A spark plug (1) according to one of the claims 1 to 4, **characterised in that** the longitudinal bore (3') is arranged parallel to the spark plug axis (1'), with the axis (3') of the longitudinal bore (3) being spaced from the spark plug axis (1').

6. A spark plug (1) according to one of the claims 1 to 5, **characterised in that** the first bore (10') and/or the second bore (21) is/are arranged in a region of the housing (2) which has the largest wall thickness with respect to the longitudinal bore (3).

7. A spark plug (1) according to one of the claims 1 to 6, **characterised in that** the axis (21') of the second bore (21) encloses an angle (γ) of ≤10°, preferably ≤5°, with a straight line (1") projected from the spark plug axis (1').

8. A spark plug (1) according to one of the claims 1 to 7, **characterised in that** the longitudinal bore (3) is spaced from the spark plug axis (1'), with preferably the axis (3') of the longitudinal bore (3) being arranged parallel to the spark plug axis (1').

## Revendications

1. Bougie d'allumage (1) comportant une installation de mesure de pression (11), un corps (2) avec un perçage longitudinal (3) pour recevoir un isolateur (9),
* le corps (2) ayant un perçage (21) pour recevoir un guide de lumière débouchant dans la chambre de combustion,
bougie d'allumage **caractérisée en ce que**
le corps (2) comporte un premier perçage (10) pour recevoir une installation de mesure de pression (11),
* l'axe (21') du second perçage (21) servant à recevoir le guide de lumière, étant gauchi par rapport à l'axe (10') du premier perçage (10) et/ou par rapport à l'axe (1') de la bougie d'allumage.

2. Bougie d'allumage (1) selon la revendication 1,
**caractérisée en ce que**
l'axe (10') du premier perçage (10) a fait un angle (α) compris entre 0° et 15° de préférence entre 3° et 7° par rapport à l'axe (1') de la bougie.

3. Bougie d'allumage (1) selon la revendication 2,
**caractérisée en ce que**
l'axe (10') du premier perçage (10) fait un plan (ε) avec l'axe (3') du perçage longitudinal (3).

4. Bougie d'allumage (1) selon la revendication 3,
**caractérisée en ce que**
vu en plan, l'axe (21') du second perçage (21) fait avec le plan (ε) un angle (β) inférieur ou égal à 25° de préférence compris entre 0° et 2°.

5. Bougie d'allumage (1) selon l'une des revendications 1 à 4,
**caractérisée en ce que**
le perçage longitudinal (3') est parallèle à l'axe (1') de la bougie.
* l'axe (3') du perçage longitudinal (3) étant écarté de l'axe (1') de la bougie.

6. Bougie d'allumage (1) selon l'une des revendications 1 à 5,
**caractérisée en ce que**
le premier perçage (10') et/ou le second perçage (21) est installé dans une zone du boîtier (2) qui présente la plus grande épaisseur de paroi par rapport au perçage longitudinal (3).

7. Bougie d'allumage (1) selon la revendication 1 à 6,
**caractérisée en ce que** l'axe (21') du second perçage (21) fait avec une droite (1") projetée de l'axe (1') de la bougie un angle (γ) inférieur ou égal à 10° et de préférence inférieur ou égal à 5°.

8. Bougie d'allumage (1) selon les revendications 1 à 7,
**caractérisée en ce que**
le perçage longitudinal (3) est écarté de l'axe (1') de la bougie et de préférence l'axe (3') du perçage longitudinal (3) est parallèle à l'axe (1') de la bougie.
